# FASCICULE DE BREVET EUROPEEN

(11) **EP 2 904 891 B1**
(45) Date de publication et mention de la délivrance du brevet: **23.06.2021**
(21) Numéro de dépôt: 15154274.3
(22) Date de dépôt: 09.02.2015
(51) Int. Cl.: A01C 5/06, B60B 1/06, B60B 5/02, B60B 7/04, B60B 25/00

(54) **ROUE FORMANT OUTIL AGRICOLE AMÉLIORÉ**
RAD, DAS EIN VERBESSERTES LANDWIRTSCHAFTLICHES GERÄT BILDET
WHEEL FORMING AN IMPROVED AGRICULTURAL TOOL

(30) Priorité: 10.02.2014 FR 1451002
(43) Date de publication de la demande: 12.08.2015
(73) Titulaire: OTICO, 77650 Chalmaison (FR)
(72) Inventeur: Phely, Olivier, 77520 Thenisy (FR)
(74) Mandataire: Cabinet Netter

(56) Documents cités:
- EP-A1- 1 671 811
- GB-A- 2 180 510
- US-A- 921 557
- US-A1- 2004 195 907
- US-B1- 6 439 670
- US-B1- 7 246 860

## Description

L'invention concerne les outils agricoles, et plus particulièrement ceux comprenant principalement une ou plusieurs roues.

Dans les outils de ce type, la ou les roues sont généralement utilisées pour travailler le sol. Les roues peuvent opérer seules, ou en coopération avec d'autres parties de l'outil.

Dans le cas d'un semoir par exemple, l'outil comprend une partie agencée pour ouvrir un sillon dans le sol, typiquement un soc, un disque ou une dent, et une ou plusieurs roues pour fermer le sillon et/ou pour tasser la terre, après que les semences ont été déposées au fond du sillon.

Certains outils, comme le semoir précité, comprennent également des roues dites "de jauge", lesquelles règlent la profondeur de travail du reste de l'outil. Dans le cas d'un outil comportant un soc par exemple, on monte des roues de jauge solidairement au soc, de sorte qu'en roulant sur le sol, les roues maintiennent la partie active du soc à une profondeur sensiblement constante.

Le plus souvent, les roues qui équipent les outils agricoles sont destinées à rouler sur le sol. Elles comprennent alors un pneumatique monté autour d'une partie de la roue qui forme le corps de celle-ci.

Pour éviter que le pneumatique ne se désolidarise du corps de roue lors du travail, la partie du corps de roue qui forme la jante est conformée de manière particulière. Il en résulte des formes généralement complexes, qui compliquent la fabrication du corps de roue, et également le montage du pneumatique sur celui-ci.

C'est pourquoi, les roues comprennent souvent deux flasques similaires qui se montent l'un sur l'autre pour former le corps de la roue. Les flasques sont assemblés l'un à l'autre par l'intermédiaire de l'une de leurs faces principales, tout en enserrant le pneumatique.

Dans FR 2 933 903, la demanderesse a proposé une roue innovante, dont la forme du corps de roue évite au pneumatique de déjanter en service, y compris dans des conditions extrêmes. Le corps en question est formé par l'assemblage mutuel de deux flasques similaires, face contre face.

Lorsqu'elles sont utilisées en tant qu'outils, les roues sont généralement soumises à des efforts importants en fonctionnement.

Dans certains cas, en particulier lorsqu'elle équipe un semoir, l'orientation de la roue dans la machine ne correspond pas à la direction d'avance de cette dernière : il arrive fréquemment que la roue soit inclinée de manière importante par rapport à la direction d'avance. En outre, la roue peut être inclinée par rapport à la verticale au sol. Il en résulte, en fonctionnement, des contraintes très importantes sur le corps de roue.

Certaines de ces roues comprennent une jante et un moyeu reliés par des bras. Les bras assurent la liaison mécanique et les transmissions de forces nécessaires au fonctionnement de la roue tout en laissant libres des passages entre les bras. Il s'agit alors de roue à voile ouvert. Une roue à voile ouvert et à flasque unique est par exemple décrite dans EP 1 671 811.

Les roues à voile ouvert nécessitent peu de matière première et sont légères. Les passages libres rendent accessible un côté de la roue depuis le côté opposé. Par exemple, un opérateur peut intervenir dans le fond d'un passage de roue d'une machine agricole sans démonter la roue de son essieu. Les passages libres sont généralement suffisants pour qu'un opérateur y passe ses mains, ses bras et des outils. Une opération de nettoyage de la machine et des roues est rapide et efficace, par exemple au moyen d'un appareil à eau pressurisée. Ceci est particulièrement appréciable pour le nettoyage et l'entretien de machines utilisées sur des sols collants et boueux, tels que les semoirs : les accumulations de terre qui tendent à durcir et endommager la machine peuvent être extraites facilement.

Les machines agricoles prévues pour évoluer sur un sol recouvert de paille et de résidus secs présentent généralement des roues à voile plein. La jante et le moyeu sont alors reliés l'un à l'autre par un disque plein.

Les roues à voile plein empêchent l'apparition de flux d'air au travers des roues. Les voiles pleins évitent de créer ou d'aggraver les tourbillons d'air autour de la machine en mouvement. Si des roues à voile ouvert étaient utilisées, les bras se comporteraient, de manière imagée, comme les pales d'un ventilateur. Par conséquent, les résidus secs seraient emportés et des nuages de poussière seraient créés. De tels nuages de poussière gênent le conducteur de la machine en réduisant sa visibilité, en rendant l'air difficilement respirable et en salissant rapidement la machine. Cela entraîne également une pollution des parcelles voisines.

Les roues à voile ouvert des machines agricoles prévues pour travailler un sol humide sont inadaptées pour évoluer sur un sol recouvert de paille et de résidus secs.

La demanderesse s'est fixé comme objectif d'améliorer la situation.

Elle propose un outil de machine agricole selon la revendication 1 du type comprenant un corps de roue incluant un moyeu, une jante et au moins deux bras chacun reliant le moyeu et la jante l'un à l'autre. Au moins un jour est ménagé entre les deux bras et la jante et présente un contour fermé. L'outil comprend en outre une pièce formant accessoire présentant une partie profilée de forme correspondant généralement audit contour fermé, et une partie généralement surfacique qui termine la partie profilée, et un jeu de fixations. La partie profilée s'insère d'un côté du corps de roue dans ledit jour en obturant ce dernier par coopération de forme, jusqu'à une position finale dans laquelle la partie surfacique vient en affleurement avec les bras, au moins à proximité dudit contour, tandis que le jeu de fixation assure le maintien de la pièce dans cette position finale.

Un tel outil permet d'adapter à volonté le caractère plein ou ouvert du voile de roue en fonction des situations. Par exemple, les jours peuvent être obturés lors du travail en champs afin d'éviter de créer des nuages de poussières et pour protéger les outils contre l'encrassage. Les accessoires peuvent être retirés en maintenance et en particulier pour faciliter le nettoyage des outils. Les mêmes roues peuvent être utilisées sur sol humide ou collant et sur sols secs en modifiant les propriétés des roues, notamment aérodynamiques, par la fixation et le retrait des accessoires.

L'outil peut présenter les caractéristiques optionnelles suivantes, seules ou en combinaison les unes avec les autres :
- Le corps de roue et/ou l'accessoire comprennent une prise pour un outil ou des doigts. La prise est configurée pour permettre le retrait de l'accessoire depuis le corps de roue par traction depuis une des deux faces du corps de roue. L'extraction de l'accessoire est ainsi facilitée depuis une des faces de la roue.
- L'accessoire est formé d'au moins deux pièces. Les deux pièces et le jeu de fixations sont configurés de manière à assembler les deux pièces l'une sur l'autre de manière amovible en enserrant le contour du jour. Le maintien de l'accessoire sur le corps de roue est amélioré. Le risque de décrochage accidentel en fonctionnement est réduit.
- L'accessoire comprend au moins deux parties généralement surfaciques similaires, chacune des parties généralement surfaciques obturant un jour respectif. L'accessoire peut prendre la forme d'une grappe propre à fermer chacun des jours du corps de roue. Un accessoire seul suffit à fermer le voile de roue.
- La partie généralement surfacique est transparente. Un utilisateur peut vérifier visuellement l'intérieur du corps de roue sans extraire l'accessoire. Une anomalie peut être détectée plus rapidement.
- Le jeu de fixations comprend au moins une patte de fixation, l'amovibilité de la fixation étant permise par la déformation élastique de la patte de fixation. Le jeu de fixations peut alors être fabriqué en même temps que la partie généralement surfacique. Par exemple, l'accessoire et le jeu de fixations peuvent être faits d'une pièce monobloc. Le risque de perte des fixations lors de maintenances est évité.
- Le jour est délimité par des bords respectifs des deux bras et de la jante. L'accessoire peut alors être fixé directement aux deux bras et à la jante. La fixation de l'accessoire au corps de roue est améliorée.
- L'accessoire comprend des nervures de renfort portées par une surface de la partie généralement surfacique, les nervures de renfort participant à la rigidification de la partie généralement surfacique. La partie généralement surfacique présente alors une meilleure résistance à la déformation et aux chocs, par exemple en cas de projections de pierres en fonctionnement.
- Le corps de roue est formé par l'assemblage d'un premier flasque et d'un second flasque qui se montent l'un sur l'autre. Le premier flasque comporte une partie centrale, une partie périphérique de forme générale annulaire, et au moins deux bras reliant la partie centrale et la partie périphérique l'une à l'autre. Le second flasque est homologue à la partie périphérique du premier flasque. À l'état monté, le corps de roue présente une jante formée conjointement par la partie périphérique du premier flasque et le second flasque et un moyeu formé par la partie centrale du premier flasque. Le premier flasque et le second flasque se fixent l'un sur l'autre et l'accessoire se fixe au premier flasque. L'accessoire peut être monté et démonté du corps de roue, et ce quel que soit l'état assemblé ou non du second flasque avec le premier flasque.

Selon un autre aspect, la demanderesse propose une pièce selon la revendication 10.

Les pièces rapportées amovibles que constituent les accessoires sont peu coûteuses et peuvent s'adapter à des corps de roue existants. De tels outils deviennent efficaces pour des applications qui nécessitaient auparavant une seconde machine, ou du moins d'autres roues.

D'autres caractéristiques, détails et avantages de l'invention apparaîtront à la lecture de la description détaillée ci-après, et des dessins annexés, sur lesquels :
- la figure 1 montre une vue éclatée et en perspective d'un outil selon l'invention dans laquelle le pneumatique n'est pas représenté,
- la figure 2 montre une vue de l'outil de la figure 1 depuis un autre point de vue et dans un état assemblé,
- la figure 3 montre une vue en coupe de l'outil de la figure 1 sur laquelle le pneumatique est monté sur le corps de roue,
- la figure 4 montre une vue similaire à la figure 1 sur laquelle le pneumatique est monté sur le corps de roue,
- la figure 5 montre une vue similaire à la figure 4 d'un autre mode de réalisation selon l'invention,
- les figures 6A à 6D montrent une machine agricole sur laquelle sont montés deux outils selon l'invention,
- la figure 7 montre une vue similaire à la figure 4 d'un autre mode de réalisation de l'invention, et
- la figure 8 montre une vue en coupe du mode de réalisation de la figure 7.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

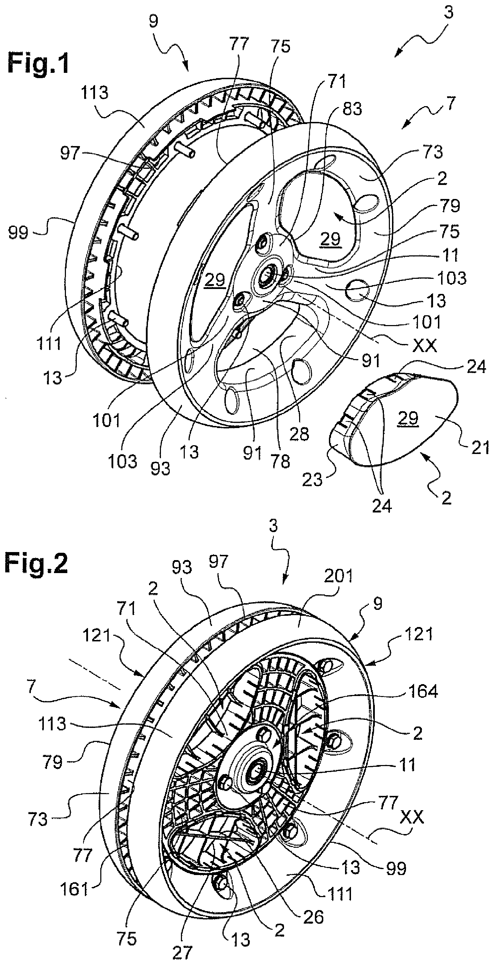

Les figures 1 à 4 montrent un outil de travail en champ sous la forme d'une roue 1. La roue 1 comprend un corps de roue 3 autour duquel est monté un pneumatique 5. La figure 1 montre le corps de roue 3 avant assemblage. La figure 2 montre le corps de roue 3 avant que le pneumatique 5 n'y soit monté.

Dans la suite de la description, on désigne par corps de roue *("body"* ou *"wheel body"* en anglais) la partie pratiquement indéformable de la roue, par opposition à la partie déformable que constitue le pneumatique. On désigne par jante *("rim"* ou *"wheel rim"* en anglais) la partie située à la périphérie du corps de roue et destinée à supporter le pneumatique. Le reste du corps de roue peut être appelé voile de roue *("dise", "wheel dise",* "*dish*"*,* ou encore *"wheel dish*" en anglais). Autrement dit, le corps de roue est constitué de la jante et du voile de roue. Ici, le terme jante ne saurait désigner l'intégralité du corps de roue, contrairement à l'usage, abusif, que l'on peut en faire communément.

Le corps de roue 3 est formé d'un premier flasque 7 et d'un second flasque 9 généralement circulaires. Le premier flasque 7 et le second flasque 9, représentés de manière séparée sur la figure 1, se montent l'un sur l'autre pour former le corps de roue 3 comme cela est représenté sur la figure 2.

Le premier flasque 7 et le second flasque 9 présentent chacun un axe central, ou axe de révolution. Ces axes centraux sont confondus à l'état assemblé et coïncident avec l'axe de rotation de la roue 1 en fonctionnement. Ces axes sont référencés XX sur les figures.

Le premier flasque 7 et le second flasque 9 présentent chacun une face interne, respectivement 77 et 97, et une face externe opposée, respectivement 79 et 99. Lors de l'assemblage du premier flasque 7 et du second flasque 9 l'un sur l'autre, les faces internes 77 et 97 sont mises en regard l'une de l'autre. Les faces externes 79 et 99 sont orientées à l'opposée l'une de l'autre, vers l'extérieur du corps de roue 3.

Le premier flasque 7 et le second flasque 9 sont fixés, ici de manière réversible, l'un à l'autre pour former le corps de roue 3 au moyen de fixations. Dans l'exemple décrit ici, les fixations comprennent des couples vis-écrou 13. Les couples vis-écrou 13 permettent de maintenir ensemble le premier flasque 7 et le second flasque 9. Ici, des couples vis-écrou 13 sont répartis suivant la périphérie du corps de roue tandis que des couples vis-écrou 13 sont répartis au voisinage du centre du corps de roue 3. En remplacement ou en supplément, d'autres moyens de fixation peuvent être utilisés, par exemples, des clips ou des rivets.

Le premier flasque 7 comporte une partie centrale 71, une partie périphérique 73 et au moins deux bras 75 reliant la partie centrale 71 à la partie périphérique 73. Ici, le premier flasque 7 comporte trois bras 75.

La partie centrale 71 présente une forme générale de révolution. À l'état assemblé, la partie centrale 71 forme le moyeu de la roue 1. L'espace central de la forme de révolution de la partie centrale 71 est propre à recevoir un essieu ou une fusée destinés à supporter la roue 1 libre en rotation selon l'axe de rotation XX. La roue 1 comprend un palier rotatif logés dans la partie centrale 71, ici sous la forme d'un roulement à billes 11. Ici, le roulement 11 comprend une double rangée de billes à contacts obliques et est logé dans une cartouche. La cartouche est de forme générale extérieure cylindrique. Le diamètre du roulement 11 est constant. En variante, le roulement à billes 11 peut être remplacé par d'autres types de roulements, et plus généralement par un palier de type différent, tel qu'un palier lisse par exemple.

La partie centrale 71 présente une surface interne 81, généralement orientée vers l'axe principal XX et formant, ici, un alésage propre à loger le roulement 11. La partie centrale 71 présente une surface externe 83, périphérique, opposée à la surface interne 81.

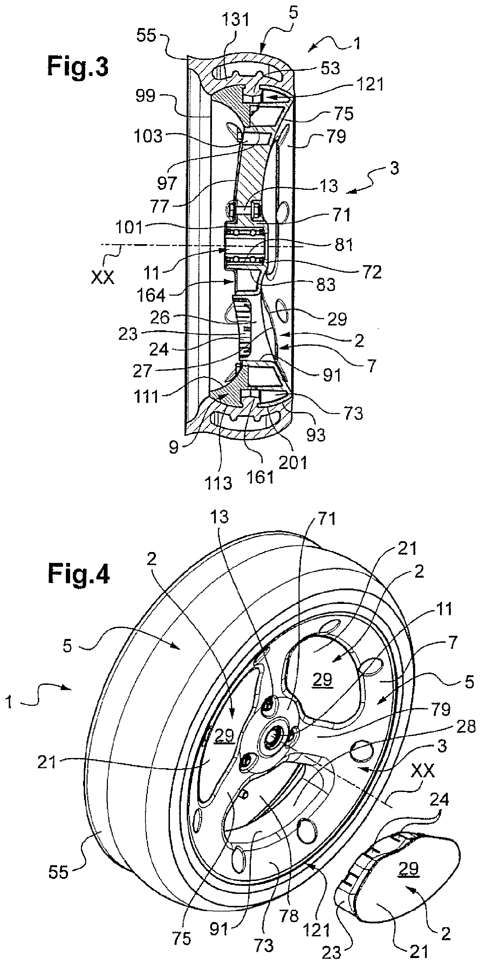

La partie périphérique 73 est de forme générale annulaire. La partie périphérique 73 est délimitée, selon la direction de l'axe principale XX, par un bord interne et un bord externe. La partie périphérique 73 et la partie centrale 71 sont sensiblement concentriques et centrées sur l'axe principal XX. La partie périphérique 73 entoure la partie centrale 71. Dans l'exemple représenté sur la figure 3, la partie périphérique 73 et la partie centrale 71 sont décalées l'une par rapport à l'autre selon la direction de l'axe principal XX. Du côté de la face interne 77 (à gauche sur la figure 3), la partie centrale 71 fait saillie selon la direction principale XX par rapport au bord interne de la partie périphérique 73 de quasiment toute la longueur de la partie centrale 71. Du côté de la face externe 79 (à droite sur la figure 3), la partie centrale 71 est disposée en retrait par rapport au bord externe de la partie périphérique 73. L'extrémité externe de la partie centrale 71 est presque alignée avec le bord interne de la partie périphérique 73. En variante, la partie périphérique 73 et la partie centrale 71 peuvent être sensiblement coplanaires selon un plan perpendiculaire à l'axe principal XX.

La partie périphérique 73 présente une surface interne 91, ou diamétralement intérieure, généralement orientée vers la partie centrale 71 et une surface externe 93, ou diamétralement extérieure et périphérique, opposée à la surface interne 91. Ici, la surface interne 91 présente une forme générale cylindrique interrompue par les bras 75. Ici, la surface externe 93 présente une forme générale annulaire, de profil arrondi et bombé vers l'extérieur.

Chaque bras 75 présente une extrémité interne 101 liée à la partie centrale 71 en sa surface externe 83, et une extrémité externe 103, opposée à l'extrémité interne 101 et reliée à la partie périphérique 73 en sa surface interne 91. Chaque bras 75 relie alors la partie centrale 71 et la partie périphérique 73 l'une à l'autre. Les bras 75 s'étendent radialement. Ils forment des rayons de la roue 1.

Ici, l'extrémité interne 101 de chacun des bras 75 est reliée à la surface externe 83 sensiblement sur les trois quarts de la longueur de la partie centrale 71 dans la direction de l'axe principal XX. Les bras 75 présentent une épaisseur, selon la direction de l'axe principal XX, qui décroît légèrement puis croît de manière régulière depuis la partie centrale 71 jusqu'à l'extrémité externe 103, où elle est maximum et sensiblement égale à l'épaisseur de la partie périphérique 73. Ainsi, l'extrémité externe 103 de chaque bras 75 se confond sensiblement avec la partie périphérique 73 à laquelle elle est reliée. La partie centrale 71 fait saillie par rapport au plan défini par le bord interne de la partie périphérique 73. La partie de la face interne 77 du premier flasque 7 définie par les bras 75 présente une forme générale tronconique reliant entre elles les extrémités internes de la partie centrale 71 et de la partie périphérique 73. La partie de la face externe 79 du premier flasque 7 définie par les bras 75 est sensiblement concave, en forme de cuvette centrée sur l'axe principale XX. L'extrémité externe de la partie centrale 71 fait légèrement saillie dans le fond de la forme de cuvette.

Des espaces 78 sont définis entre les bras 75 et la surface interne 91 de la partie périphérique 73. La répartition des bras 75 autour de la partie centrale 71 définit autant d'espaces intercalaires 78. Ces espaces 78 sont libres et traversants selon la direction de l'axe principal XX., de la face interne 77 à la face externe 79. Lorsqu'ils sont laissés libres, les espaces 78 facilitent l'évacuation de débris et de boue au travers du premier flasque 7. Les bras 75 et les espaces 78 intercalaires forment alors conjointement un voile de roue ouvert.

Les bras 75 sont régulièrement répartis de façon angulaire autour de l'axe principal XX. Dans les exemples décrits ici, ils sont au nombre de trois et écartés de 120° les uns des autres. Cette configuration permet d'assurer une résistance mécanique suffisante pour les applications envisagées tout en permettant une économie de matière par rapport à un voile de roue plein. Dans des variantes, le nombre et/ou la répartition des bras 75 peuvent être différents.

Dans les exemples décrits ici, le premier flasque 7 est conformé en une pièce monobloc. Le premier flasque 7 est obtenu, par exemple, par moulage par injection. Le premier flasque 7 est, ici, en matériau plastique, par exemple du polyamide tel que du polyamide 6-6, ou du polypropylène. Le premier flasque 7 en plastique présente des coûts faibles en matière première et en fabrication. Néanmoins, le premier flasque 7 peut également être réalisé en métal. Le premier flasque 7 en métal présente alors une résistance améliorée aux chocs, par exemple en cas de projections de pierres lors du roulage de la machine.

Comme cela apparaît sur les figures 2 et 3, le premier flasque 7 peut prendre la forme d'une enveloppe consolidée par des parois internes de renfort, ou nervures, entre lesquelles de multiples cavités sont laissées vides. Les nervures confèrent au premier flasque 7 une bonne résistance mécanique, comparable à une pièce métallique et/ou une pièce plastique pleine. Elles permettent d'assurer la résistance mécanique nécessaire avec peu de matière première. Le volume occupé par le premier flasque 7 est en grande partie creux.

Le cas échéant, le nombre, la répartition et la forme des nervures peuvent être adaptés en fonction de la résistance mécanique souhaitée pour le premier flasque 7. Des outils de modélisation de type à éléments finis peuvent être utilisés.

La partie centrale 71 loge le roulement 11. Au montage, le roulement 11 est monté coaxialement à l'axe principal XX du corps de roue 3. Le roulement 11 est maintenu dans cette position grâce au logement de sorte que l'axe principal XX du corps de roue 3 coïncide avec l'axe de rotation de la roue 1 en utilisation.

Dans l'exemple décrit ici, la surface intérieure 81 de la partie centrale 71 du premier flasque 7 prend la forme d'un alésage cylindrique traversant selon l'axe principal XX. Le diamètre de l'alésage cylindrique correspond à celui de la forme cylindrique extérieure du roulement 11.

Dans l'exemple de la figure 3, la partie centrale 71 du premier flasque 7 est configurée de manière à permettre un mouvement de translation du roulement 11 selon l'axe principal XX, en l'absence d'une pièce rapportée 164. Ainsi, le roulement 11 peut être inséré dans son logement, et extrait de celui-ci, facilement.

La partie centrale 71 comprend, en outre, une butée axiale 72 configurée de manière à limiter le mouvement de translation du roulement 11. La butée axiale 72 est, ici, formée du côté de la face externe 79 du premier flasque 7. Par conséquent, l'insertion et l'extraction du roulement 11 peuvent être faites du côté opposé. La butée axiale 72 permet de régler le positionnement du roulement 11 par rapport au premier flasque 7. La butée axiale 72 peut être vue comme un fond du logement.

La roue 1 comprend en outre la pièce rapportée 164, ou coupelle. La pièce rapportée 164 est conformée de manière à être fixée au corps de roue 3 en enfermant le roulement 11 logé dans la partie centrale 71 du premier flasque 7. La pièce rapportée 164 présente, ici, une forme générale de disque dans lequel une ouverture centrale circulaire est ménagée. La pièce rapportée 164 est, ici, fabriquée par estampage d'une pièce de tôle. À l'état installée, la pièce rapportée 164 couvre en partie la partie centrale 71.

La pièce rapportée 164 se fixe du côté ouvert du logement pour le roulement 11, c'est-à-dire, ici, du côté de la face interne 77. La pièce rapportée 164 est fixée avec les couples vis-écrou 13 disposés au voisinage du centre de la roue 1. Une fois fixée contre la partie centrale 71, la pièce rapportée 164 forme un couvercle du logement et butée axiale pour le roulement 11. Le roulement 11 est enfermé à l'intérieur du logement. L'ouverture au centre de la pièce rapportée 164 permet le passage d'un essieu pour le montage de la roue 1 sur une machine agricole. En fonctionnement, la pièce rapportée 164 assure le maintient axial du roulement 11.

Dans le mode de réalisation des figures 1 à 4, le roulement 11 peut être extrait de son logement sans qu'il soit nécessaire de désassembler les deux flasques 7, 9, par exemple pour être remplacé en maintenance. Le démontage de la pièce rapportée 164 suffit à ouvrir le logement et à libérer le roulement 11.

La pièce rapportée 164, en couvrant au moins partiellement le moyeu, le protège de l'environnement. Par exemple, la pièce rapportée 164 protège le moyeu et le palier 11 qui y est logé des chocs dus aux projections de cailloux en fonctionnement. La pièce rapportée 164 protège également des contraintes et frottements qui peuvent résulter de l'accumulation de terre séchée à proximité des parties en mouvement de la roue 1. La pièce rapportée 164 évite la pollution du palier 11 par des corps étrangers.

Le second flasque 9 est homologue de la partie périphérique 73 du premier flasque 7. Le second flasque 9 présente une forme générale annulaire. Le second flasque 9 est dépourvu de bras et de partie centrale formant moyeu. Le second flasque 9 présente une surface interne 111 homologue de la surface interne 91 du premier flasque 7, généralement orientée vers l'axe de rotation XX et une surface externe 113 homologue de la surface externe 93 du premier flasque 7, opposée à la surface interne 111. La surface interne 111 du second flasque 9 et la surface interne 91 du premier flasque 7 fonctionnent de manière analogue.

Dans l'exemple représenté sur les figures, le second flasque 9 prend la forme d'un anneau de section pleine et généralement triangulaire. L'un des côtés de la forme en triangle porte la surface externe 113 homologue de la surface externe 93 de la partie périphérique 73 du premier flasque 7. La surface externe 113 présente une forme générale annulaire, de profil arrondi et bombé vers l'extérieur.

Lors de l'assemblage des deux flasques 7, 9 l'un sur l'autre, les espaces 78 du premier flasque 7 viennent en regard de l'espace intérieur libre de la forme annulaire du second flasque 9. Les espaces 78 restent donc traversants. Le corps de roue 3 présente alors un voile de roue ouvert.

Dans les exemples décrits ici, le second flasque 9 est formé d'une pièce monobloc. Le second flasque 9 est obtenu par moulage. Le second flasque 9 prend une forme de collerette ou de rebord périphérique. En variante, le second flasque 9 peut être obtenu par estampage ou par emboutissage à partir d'une tôle. Le second flasque 9 est, ici, en métal, par exemple de l'acier. En variante, de l'aluminium peut être utilisé. Le second flasque 9 présente une résistance mécanique élevée. Néanmoins, le second flasque 9 peut également être réalisé en un matériau plastique, par exemple similaire à celui du premier flasque 7.

Le premier flasque 7 en plastique présente un faible coût de fabrication tandis que le second flasque 9 en métal confère au corps de roue 3 la résistance mécanique nécessaire au travail en champs. Néanmoins, les deux flasques 7, 9 peuvent être réalisés tout deux en métal, par exemple lorsque les contraintes mécaniques prévues sont sévères, ou tout deux en plastique, par exemple lorsque les contraintes mécaniques prévues sont modestes. La configuration générale du corps de roue 3 formé par le premier flasque 7 et le second flasque 9 permet d'adapter le comportement mécanique du corps de roue 3 en adaptant les matériaux utilisés sans altérer la configuration générale du corps de roue 3. En variante, le premier flasque 7 et/ou le second flasque 9 peuvent être réalisés par assemblage de plusieurs pièces plutôt que par une pièce monobloc. Par exemple, la partie périphérique 73 du premier flasque 7 et/ou le second flasque 9 peuvent être formés de plusieurs sections d'anneau.

Une fois les deux flasques 7, 9 mutuellement assemblés, le corps de roue 3 présente une jante 121 formée conjointement par la partie périphérique 73 du premier flasque 7 et le second flasque 9 homologue de la partie périphérique 73. La jante 121 présente alors une surface externe formée conjointement par la surface externe 93 de la partie périphérique 73 du premier flasque 7 et par la surface externe 113 homologue du second flasque 9. Cette surface externe de jante forme un siège 201 de corps de roue 3. Le siège 201 accueille le pneumatique 5.

Dans l'exemple décrit ici, une fois le pneumatique 5 enfilé sur la jante 121, le premier flasque 7 et le second flasque 9 supportent le pneumatique 5, ici chacun sensiblement pour moitié. L'aire de la surface externe 93 du premier flasque 7 couverte par le pneumatique 5 est sensiblement équivalente à l'aire de la surface externe 113 homologue du second flasque 9 couverte par le pneumatique 5. Le premier flasque 7, le second flasque 9 et le pneumatique 5 sont mutuellement configurés de sorte que la force radiale appliquée par le pneumatique 5 encerclant le corps de roue 3 se répartie sensiblement de manière équivalente sur les deux flasques 7, 9. Ici, aucun du premier flasque 7 et du second flasque 9 n'a pour fonction unique le blocage du pneumatique 5 selon la direction de l'axe principal XX. En variante, la répartition des forces peut être déséquilibrée, par exemple jusqu'à un rapport de 4 pour 1.

Le pneumatique 5 comprend une semelle 131 en appui sur le siège 201 de la jante 121. Les configurations de la semelle 131 d'une part, et du siège 201 d'autre part, sont choisies concordantes, sensiblement en correspondance de forme. En fonctionnement, le pneumatique 5 est maintenu autour du corps de roue 3. Le risque de déjantage accidentel est faible, même en conditions difficiles.

Dans les exemples décrits ici, le pneumatique 5 est un pneumatique du type semi-creux. Le pneumatique 5 est du type non gonflable. L'espace intérieur entre la semelle 131 et la bande de roulement est en communication fluidique avec l'extérieur, par une ouverture non représentée. Ceci permet une plus grande déformation du pneumatique 5 en fonctionnement, facilitant ainsi le décollage de la boue.

Dans les modes de réalisations représentés sur les figures, le siège 201 présente un diamètre qui varie le long de la direction de l'axe principal XX. Le siège 201 présente une forme non strictement cylindrique. Au voisinage de l'interface entre le premier flasque 7 et le second flasque 9, c'est-à-dire au voisinage des faces internes 77, 97, le diamètre du siège 201 est sensiblement différent du diamètre du siège 201 au voisinage des faces opposées, c'est-à-dire les faces externes 79, 99. Ceci est visible sur la figure 3 en coupe. Des portions du siège 201 s'opposent ainsi au déplacement axial du pneumatique 5. Le risque de déjantage accidentel est particulièrement faible. L'ajout d'une pièce spécifique formant joue de blocage est superflu.

Dans les exemples décrits ici, au voisinage de l'interface entre le premier flasque 7 et le second flasque 9, le diamètre du siège 201 est supérieur au diamètre du siège 201 au voisinage des faces opposées des flasques 7, 9, à l'exception d'une rainure 161. Le siège 201 présente alors une forme générale convexe. Cette configuration permet, par exemple, l'utilisation de pneumatiques dont la semelle 131 est concave et coiffe un siège 201 convexe en l'entourant partiellement. De tels pneumatiques sont par exemple décrits dans FR 2 933 903.

En variante, au voisinage de l'interface entre le premier flasque 7 et le second flasque 9, le diamètre du siège 201 est inférieur au diamètre du siège 201 au voisinage des faces opposées. Le siège 201 présente alors une forme générale concave. Le siège 201 présente des surfaces s'opposant au déplacement axial du pneumatique 5.

En outre, la partie périphérique 73 du premier flasque 7 et le second flasque 9 sont mutuellement conformés de sorte que leur assemblage définisse la rainure 161. La rainure 161 s'étend sensiblement sur la circonférence du corps de roue 3, à l'interface de la partie périphérique 73 du premier flasque 7 et du second flasque 9. La rainure 161 est propre à loger un talon 53 correspondant du pneumatique 5. Le maintien du pneumatique 5 autour du corps de roue 3 est encore amélioré.

Dans chacun des modes de réalisation représentés sur les figures, le corps de roue 3 est asymétrique. En particulier, le moyeu formé par la partie centrale 71 du premier flasque 7 est décalé par rapport au milieu du corps de roue 3 selon l'axe principal XX. Le moyeu du premier flasque 7 dépasse au moins en partie dans l'espace intérieur défini par la forme annulaire du second flasque 9, et ce plus ou moins selon les modes de réalisation. Cette caractéristique est optionnelle mais permet un meilleur équilibrage de l'outil 1 une fois installé sur le reste de la machine.

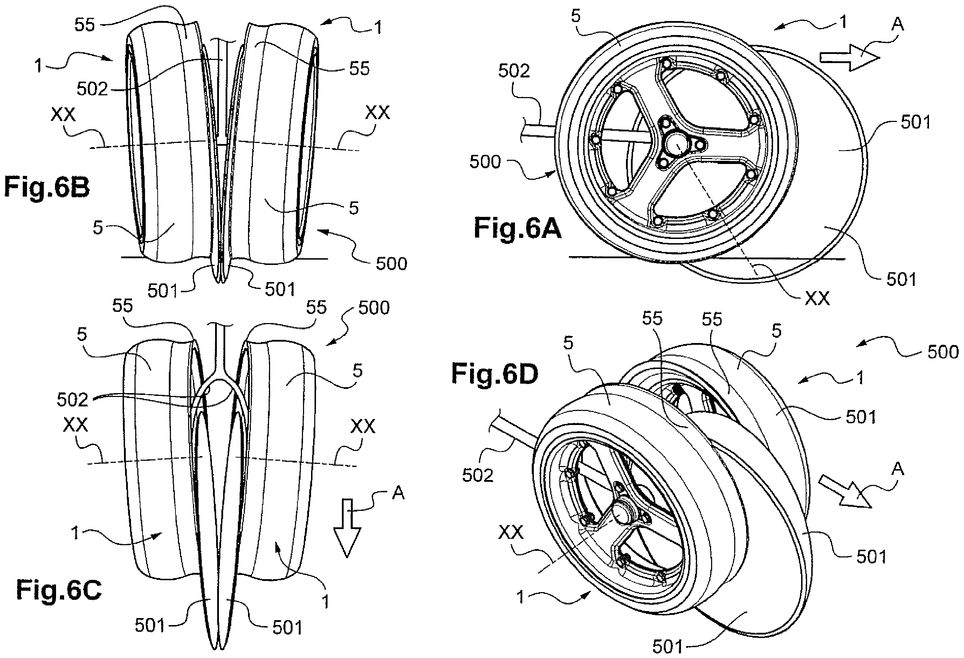

Le pneumatique 5 tel que représenté en figures 3 à 5 présente un profil asymétrique. La semelle 131 et le siège 201 présentent chacun un plan de symétrie perpendiculaire à l'axe principal XX. La partie du pneumatique 5 opposée à la semelle 131, la bande de roulement, est asymétrique. La bande de roulement présente une lèvre 55. La lèvre 55 fait saillie depuis le pneumatique 5, sensiblement selon la direction de l'axe principal XX, vers l'extérieur, du côté de la face externe 99 du second flasque 9. La lèvre 55 s'étend sensiblement le long de la circonférence du pneumatique 5. Une telle roue 1 pourvue d'un pneumatique 5 à lèvre 55 est prévue pour être installée sur une machine telle que représentée schématiquement sur les figures 6A à 6D.

Dans les exemples représentés sur les figures, la lèvre 55 du pneumatique 5 est située du côté du second flasque 9. Dans cette configuration, un espace libre important est ménagé à l'intérieur de la roue 1 du côté de la lèvre 55. L'espace libre permet notamment de loger, en partie dans l'espace intérieur défini par le pneumatique 5, un bras 502 d'un bâti de machine agricole supportant un essieu disposé sensiblement selon l'axe principal XX. Les figures 6A à 6D montrent un exemple d'un tel montage. Dans cet exemple, le bras 502 du bâti doit pouvoir s'étendre entre l'axe principal XX au voisinage du roulement 11 et la périphérie de la roue 1. Le bras 502 du bâti doit en outre ne pas gêner le fonctionnement du disque 501 disposé au contact d'une partie de la lèvre 55 et obturant en partie une face de la roue 1. Dans des variantes, la lèvre 55 peut être disposée du même côté de la roue 1 que le premier flasque 7, face au disque 501.

Les figures 6A à 6D représentent partiellement un semoir 500 dans lequel des outils 1 similaires à celui des figures 1 à 5 coopèrent chacun avec un disque 501. L'outil 1 forme alors une roue de jauge. L'outil 1 est libre en rotation mais solidaire du disque 501 selon une direction sensiblement verticale. Ainsi, même en présence de dénivelés dans un champ, le disque 501 travaille à une profondeur sensiblement constante par rapport à la surface du sol. En outre, les axes respectifs de l'outil 1 et du disque 501 sont décalés l'un par rapport à l'autre. Au cours de l'avancé du semoir 500, la lèvre 55 de l'outil 1 racle contre l'une des faces du disque 501, le nettoyant ainsi de la boue et des débris qui pourraient s'y être fixés. Dans cet exemple d'application de l'outil 1, une des deux faces de l'outil 1 est inaccessible en fonctionnement : le côté de l'outil 1 correspondant à la face externe 99 du second flasque 9 est peu accessible à cause du disque 501.

Comme cela apparaît sur la vue de face de la figure 6B, c'est-à-dire orientée vers l'arrière selon le sens d'avancement du semoir 500, le semoir 500 présente une configuration dite "en V". Deux disques 501 coopèrent pour creuser un sillon dans la terre. Les deux disques 501 sont le symétrique l'un de l'autre par rapport à un plan vertical s'étendant selon la direction d'avancée représentée par la flèche A. Les disques 501 ne sont pas disposés à la verticale mais au contraire orientés en partie vers le sol. Ils forment par exemple un angle d'environ 5° avec la verticale. Une roue 1 coopère avec chacun des disques 501. Les deux roues 1 présentent une orientation similaire à celle des disques 501, bien que la valeur de l'angle puisse être différente.

Comme cela apparaît sur la vue de dessus de la figure 6C, le semoir 500 présente, en outre, une configuration "en V" selon une autre orientation dans l'espace. Les deux disques 501 forment aussi un angle avec la direction d'avancée du semoir 500. L'angle vaut ici, environ 5° également. Les roues 1 présentent une orientation similaire à celle des disques 501, bien que la valeur de l'angle puisse être différente.

A cause de ces orientations particulières, les efforts subis par les roues 1 et dus à la résistance du terrain et aux frottements sont élevés. Ils sont supérieurs à ceux que subirait une roue 1 identique dont l'axe de rotation XX serait sensiblement perpendiculaire à la direction d'avancée et/ou horizontal.

Les contraintes tendent à se concentrer au niveau du moyeu et de la liaison avec l'essieu. La configuration du corps de roue décrit ci avant présente donc un intérêt spécifique pour les outils agricoles présentant une configuration similaire.

À l'état assemblés du premier flasque 7 et du second flasque 9 l'un sur l'autre, le corps de roue 3 présente un voile ouvert. Les espaces 78 du premier flasque 7 sont préservés libres lors de l'assemblage avec le second flasque 9. Les espaces 78 peuvent donc être vus comme des jours du corps de roue 3.

Les espaces 78 sont définis par un contour 28 fermé, formé ici par :
- un bord de chacun de deux bras 75 adjacents,
- une partie de la surface intérieure 91 de la partie périphérique 73 du premier flasque 7, et
- une partie de la surface extérieure 83 de la partie centrale 71 du premier flasque 7.

Le contour 28 présente donc une section de passage en forme générale de portion de couronne. En variante, les extrémités internes 101 de deux bras 75 adjacents sont reliées entre elles. Dans ce cas, le contour 28 est formé par un bord de chacun de deux bras 75 adjacents et une partie de la surface intérieure 91 de la partie périphérique 73 du premier flasque 7.

L'outil 1 comprend en outre au moins un accessoire, ici sous la forme d'un cache 2. Le cache 2 présente une forme générale complémentaire d'un au moins des espaces 78 du corps de roue 3. Le cache 2 est propre à être fixé de manière amovible au corps de roue 3 en obturant l'espace 78 correspondant.

Dans les exemples décrits ici, les trois espaces 78 de chaque corps de roue 3 sont similaires. L'outil 1 comprend trois caches 2 identiques.

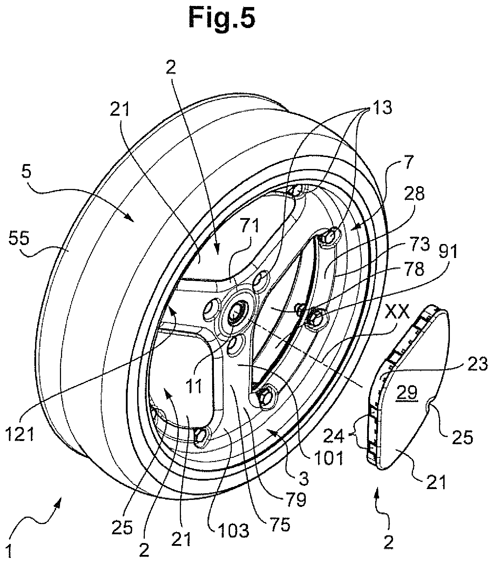

Le cache 2 représenté en figure 1, comme celui représenté en figure 5, comprend une partie généralement surfacique, formée ici par une paroi principale 21, et une partie profilée, formée ici par un rebord 23. La partie généralement surfacique termine la partie profilée. La paroi principale 21 présente une coopération de forme avec l'espace 78, soit ici une forme générale de portion de couronne. La paroi principale 21 présente une surface intérieure 27 et une surface extérieure 29 opposée à la surface intérieure 27.

Le rebord 23 prend la forme d'une paroi formant saillie depuis la surface intérieure 27 de la paroi principale 21 et s'étendant le long du contour de la paroi principale 21.

Le cache 2 comprend un jeu de fixations, prenant ici la forme de pattes de fixation 24. Les pattes de fixation 24 sont formées par des découpes dans le rebord 23. Les pattes de fixation 24 sont reliées à la paroi principale 21 par une extrémité tandis que l'extrémité opposée est libre. Les pattes de fixation 24 sont propres à se déformer élastiquement, ici par flexion, lors de la fixation et du retrait du cache 2 d'avec le corps de roue 3.

Dans l'exemple décrit ici, le cache 2 est en matériau plastique. Le cache 2 forme, ici, une pièce monobloc obtenue par moulage. En outre, le matériau utilisé est transparent. Ainsi, à l'état installé sur le corps de roue 3, la paroi principale 21 transparente forme une fenêtre ou un hublot de contrôle visuel. En maintenance, un contrôle visuel est possible sans retrait du cache 2. En variante, le cache 2 est opaque.

Le cache 2 comprend des nervures de renfort 26. Les nervures de renfort 26 sont portées par la surface intérieure 27. Les nervures de renfort 26 font saillie depuis la surface intérieure 27 entre deux portions du rebord 23. Les nervures de renfort 26 participent à la rigidification de la paroi principale 21.

Le cache 2 s'insère dans l'espace 78 correspondant, ici ménagé dans le premier flasque 7. La direction d'insertion correspond sensiblement à la direction principale XX du corps de roue 3. Le rebord 23 forme alors un guidage d'insertion. Les pattes de fixation 24 fléchissent vers le centre de la paroi principale 21 en réaction de contacts avec le corps de roue 3. La force de rappel élastique des pattes de fixation 24 génère des forces de frottement entre le cache 2 et le contour 28 de l'espace 78. Les forces de frottement s'opposent à l'extraction du cache 2 depuis l'espace 78, une fois inséré. L'éjection accidentelle du cache 2 depuis le corps de roue 3 en cours de fonctionnement est évitée. Dans l'exemple décrit ici, les extrémités libres des pattes de fixation 24 forment des crochets aptes à venir en appui contre la face interne 79 du premier flasque 7. Les crochets améliorent le maintien du cache 2 à la fin de l'insertion.

À la fin de l'insertion, le contour de la paroi principale 21 vient épouser le contour 28 de l'espace 78. L'espace 78 est alors obturé par le cache 2 et en particulier par la paroi principale 21. La paroi principale 21 vient à l'affleurement du contour 28. La surface extérieure 29 de la paroi principale 21 est alors disposée en continuité de la face externe du corps de roue 3, formée ici par la face externe 79 du premier flasque 7. Autrement dit, le contour de la surface extérieure 29 vient s'aligner avec le contour 28 de l'espace 78 selon la direction principale XX, sensiblement sur tout le pourtour. La surface extérieure 29 vient former une partie de la face externe du corps de roue 3, correspondant ici à la face externe 79 du premier flasque 7.

La circulation d'air au travers de l'espace 78 est empêchée.

Lorsque tous les espaces 78 d'un corps de roue 3 sont comblés par un cache 2, le corps de roue 3 devient un corps de roue à voile plein (ou fermé).

En appliquant une force sur le cache 2 surpassant les forces de frottement entre le cache 2 et le corps de roue 3, le cache 2 peut être extrait de l'espace 78. Le cache 2 est donc fixé au corps de roue 3 de manière amovible. La fermeture de l'espace 78 est réversible. Le caractère plein ou ouvert du voile de roue de la roue 1 peut être réglé au moins en partie par la fixation de caches 2 dans les espaces 78 et leur retrait. L'amovibilité de la fixation du cache 2 est permise par les fixations, ici par la déformation élastique des pattes de fixation 24.

Le cache 2 peut être vu comme un obturateur ou un bouchon propre à fermer, à volonté, les espaces libres d'un voile de roue ouvert.

La forme de la surface extérieure 29 est configurée de manière à être homogène avec la surface du corps de roue 3 adjacente à l'état installé du cache 2. Dans l'exemple décrit ici, la surface extérieure 29 est concave. La forme concave est homogène avec la forme de cuvette centrée sur l'axe principale XX de la partie de la face externe 79 du premier flasque 7 définie par les bras 75 et la partie périphérique 73 telle que décrite ci-avant. Dans une variante dans laquelle la face externe 79 du corps de roue est plane, la surface extérieure 29 du cache 2 est plane également. De manière générale, la continuité des surfaces ainsi obtenue à l'état installé du cache 2 dans un espace 78 améliore le caractère laminaire d'un écoulement d'air le long de la face externe de la roue 1.

En conséquence, la roue 1 en mouvement présente un comportement aérodynamique plus régulier. Les faces extérieures 29 de chaque cache 2 forment un carénage de la roue 1 contre lequel l'écoulement de l'air est plus laminaire. La pénétration dans l'air de la roue 1 est améliorée. Régulariser les surfaces extérieures de l'outil 1 permet de limiter la création de nuage de poussière, en particulier sur des sols secs.

Le cache 2 présente en outre une fonction d'habillage. La pénétration de matière par l'intermédiaire des espaces 78 est empêchée, par exemple de la terre et de la poussière. Le nettoyage de l'outil 1 peut être facilité en extrayant le cache 2.

Les propriétés aérodynamiques du voile de roue sont particulièrement importantes lorsque le plan principal du voile de roue forme un angle non nul avec la direction d'avancée A de la machine. En fonctionnement, une face de la roue est alors partiellement orientée vers l'avant et offre une prise au vent plus importante qu'une roue quelconque dont la direction d'avancée serait confondue avec son plan de rotation.

Les propriétés de protection contre la boue et la poussière sont particulièrement importantes lorsque le plan principal du voile de roue forme un angle non nul avec la verticale, par exemple lorsque la roue présente une face extérieure en partie orientée en direction du sol.

De telles configurations de roues, critiques en fonctionnement, sont combinées par exemple dans le semoir 500 des figures 6A à 6D avec la configuration "en V", à la fois vue de face et à la fois vue de dessus.

Le mode de réalisation de la figure 5 est similaire à celui des figures 1 à 4. Les parties fonctionnellement identiques y portent les mêmes références numériques. Le corps de roue 3 se distingue du mode de réalisation précédent en ce que le second flasque est homologue du premier flasque 7. Le second flasque comprend alors une partie centrale et des bras. À l'état monté, le corps de roue 3 présente une jante 121 formée conjointement par la partie périphérique 73 du premier flasque 7 et la partie homologue du second flasque. La partie centrale du second flasque reçoit le moyeu formé par la partie centrale 71 du premier flasque 7.

Dans le mode de réalisation de la figure 5, le cache 2 comprend en outre une prise 25 pour un outil ou des doigts, prenant, ici, la forme d'une empreinte ménagée au voisinage du contour 28. La prise 25 forme une exception à l'homogénéité de la surface et à la correspondance de forme du contour 28 de l'espace 78 avec le contour de la paroi principale 21. La prise 25 est configurée pour permettre le retrait du cache 2 depuis le corps de roue 3 par traction depuis une face du corps de roue 3. Ceci est particulièrement utile lorsque le cache 2 n'est pas accessible depuis la face opposée de la roue 1. Par exemple, dans la configuration représentée aux figures 6A à 6D, il est difficile de pousser les caches 2 depuis le côté du second flasque 9 à cause du disque 501 qui gêne l'accès. En variante, la prise est ménagée dans le corps de roue 3, par exemple en regard de la prise 25 telle qu'elle est représentée en figure 5.

Dans des variantes combinant un jeu de fixations incluant un système de clipsage et une prise 25, la prise 25 peut permettre de déverrouiller le clipsage.

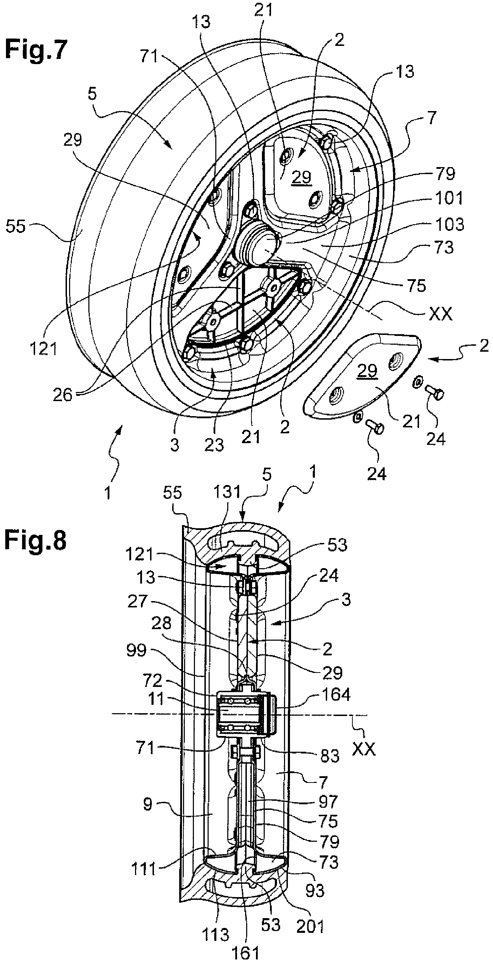

Dans un mode de réalisation représenté aux figures 7 et 8, le cache 2 comprend au moins deux pièces configurées pour s'assembler l'une sur l'autre de manière amovible en enserrant le contour 28 de l'espace 78. Ainsi, les deux faces de la roue 1 peuvent être rendues régulières. Le comportent aérodynamique est encore amélioré.

Dans un mode de réalisation, le cache est propre à obturer au moins deux espaces 78. Par exemple, le cache présente une forme générale de couronne propre à obturer les trois espaces 78 en recouvrant partiellement les bras 75. Le cache comprend alors trois pièces, correspondant sensiblement aux trois caches du mode de réalisation des figures 1 à 5, reliées ensemble par des portions de liaison qui s'appliquent contre la face externe des bras 75 du corps de roue 3 à l'état installé du cache. Un tel cache peut être fabriqué en une seule fois et en une seule pièce, par exemple par moulage. En comparaison, trois caches 2 distincts doivent être réalisés pour le mode de réalisation des figures 1 à 5. En outre, un cache unitaire pour occuper plusieurs espaces réduit le risque de perdre un des caches.

En variante, le jeu de fixations comprend par exemple une liaison pivot entre le cache et le corps de roue combinée avec un verrouillage. Le cache prend alors la forme d'un volet ou d'une trappe qui peut être soit verrouillé de manière à obturer les jours, soit déverrouillée et laissant ouverts les jours et en restant lié au corps de roue par la liaison pivot. Une telle variante peut, par exemple, être obtenue en fabriquant le premier flasque 7 et les caches en une seule pièce par moulage de plastique. La liaison pivot est alors formée par des liaisons flexibles entre les caches et le corps de roue.

Dans une autre variante, le corps de roue et les caches peuvent être réalisés d'une pièce monobloc et reliés par des parties détachables ou sécables. Dans ce cas, un utilisateur dispose d'une roue à voile plein et peut, s'il le souhaite, séparer les caches du corps de roue pour obtenir une roue à voile de roue ouvert.

Dans les modes de réalisations décrits ici, le corps de roue est obtenu par assemblage de deux flasques face contre face. En variante, le corps de roue est conformé en une pièce monobloc.

Grâce à la coopération entre le corps de roue et l'accessoire d'un outil selon l'invention, la roue peut présenter un voile ouvert ou un voile fermé. Par des opérations simples d'insertion et de retrait du cache, un opérateur peut adapter rapidement un tel outil aux conditions du terrain.

Lorsque les caches sont fixés dans le corps de roue, la pénétration de terre ou de tout autre polluant dans la partie intérieur de l'outil est limitée. Pour autant, l'intérieur de l'outil reste accessible en maintenance et notamment pour le nettoyage, par le retrait des caches.

L'invention peut être vue comme un kit. Le kit comprend alors au moins un cache tel que décrit ci-avant et propre à être associé à un corps de roue. Le kit peut comprendre un corps de roue compatible avec le cache. En variante, le kit peut être dépourvu de corps de roue et les caches être compatibles avec des corps de roue existants. De tels caches présentent un coût de fabrication faible.

L'invention ne se limite pas aux exemples d'outils décrits ci-avant, seulement à titre d'exemple, mais elle englobe toutes les variantes qui entrent dans le cadre des revendications ci-après.

## Revendications

1. Outil (1) de machine agricole pour travailler le sol du type comprenant un corps de roue (3) incluant un moyeu (71), une jante (73) et au moins deux bras (75) chacun reliant le moyeu (71) et la jante (73) l'un à l'autre, au moins un jour (78) ménagé entre les deux bras (75) et la jante (73), et présentant un contour (28) fermé, **caractérisé en ce qu'**il comprend en outre :
- aumoins une pièce formant accessoire (2) présentant une partie profilée (23) de forme correspondant généralement audit contour (28) fermé, et une partie (21) généralement surfacique qui termine la partie profilée (23), et
- un jeu de fixations (24),
et **en ce que** la partie profilée (23) s'insère d'un côté du corps de roue (3) dans ledit jour (78) en obturant ce dernier par coopération de forme, jusqu'à une position finale dans laquelle la partie surfacique (21) vient en affleurement avec les bras (75), au moins à proximité dudit contour (28), tandis que le jeu de fixation (24) assure le maintien de la pièce (2) dans cette position finale.

2. Outil (1) selon la revendication 1, dans lequel le corps de roue (3) et/ou l'accessoire (2) comprennent une prise (25) pour un outil ou des doigts, la prise (25) étant configurée pour permettre le retrait de l'accessoire (2) depuis le corps de roue (3) par traction depuis une des deux faces (79 ; 99) du corps de roue (3).

3. Outil (1) selon l'une des revendications précédentes, dans lequel l'accessoire (2) est formé d'au moins deux pièces, les deux pièces et le jeu de fixations (24) étant configurés de manière à assembler les deux pièces l'une sur l'autre de manière amovible en enserrant le contour (28) du jour (78).

4. Outil (1) selon l'une des revendications précédentes, dans lequel l'accessoire (2) comprend au moins deux parties généralement surfaciques (21) similaires, chacune des deux parties généralement surfaciques (21) obturant un jour (78) respectif.

5. Outil (1) selon l'une des revendications précédentes, dans lequel la partie généralement surfacique (21) est transparente.

6. Outil (1) selon l'une des revendications précédentes, dans lequel le jeu de fixations (24) comprend au moins une patte de fixation, l'amovibilité de la fixation étant permise par la déformation élastique de la patte de fixation.

7. Outil (1) selon l'une des revendications précédentes, dans lequel le jour (78) est délimité par des bords respectifs des deux bras (75) et de la jante (73).

8. Outil (1) selon l'une des revendications précédentes, dans lequel l'accessoire (2) comprend des nervures de renfort (26) portées par une surface (27) de la partie généralement surfacique (21), les nervures de renfort (26) participant à la rigidification de la partie généralement surfacique (21).

9. Outil (1) selon l'une des revendications précédentes, dans lequel le corps de roue (3) est formé par l'assemblage d'un premier flasque (7) et d'un second flasque (9) qui se montent l'un sur l'autre,
le premier flasque (7) comporte une partie centrale (71), une partie périphérique (73) de forme générale annulaire, et au moins deux bras (75) reliant la partie centrale (71) et la partie périphérique (73) l'une à l'autre,
le second flasque (9) est homologue à la partie périphérique (73) du premier flasque (7), à l'état monté, le corps de roue (3) présente une jante (121) formée conjointement par la partie périphérique (73) du premier flasque (7) et le second flasque (9) et un moyeu formé par la partie centrale (71) du premier flasque (7),
le premier flasque (7) et le second flasque (9) se fixent l'un sur l'autre et l'accessoire (2) se fixe au premier flasque (7).

10. Pièce (2) pour un outil de machine agricole pour travailler le sol selon une des revendications 1 à 9, le corps de roue (3) incluant un moyeu (71), une jante (73) et au moins deux bras (75) chacun reliant le moyeu (71) et la jante (73) l'un à l'autre, au moins un jour (78) ménagé entre les deux bras (75) et la jante (73), et présentant un contour (28) fermé, la pièce (2) présentant une partie profilée (23) de forme correspondant généralement audit contour (28) fermé, et une partie (21) généralement surfacique qui termine la partie profilée (23), la partie profilée (23) s'insérant d'un côté du corps de roue (3) dans ledit jour (78) en obturant ce dernier par coopération de forme, jusqu'à une position finale dans laquelle la partie surfacique (21) vient en affleurement avec les bras (75), au moins à proximité dudit contour (28).

## Patentansprüche

1. Gerät (1) einer landwirtschaftlichen Maschine zur Bearbeitung des Bodens, in der Art einen Radkörper (3) umfassend, der eine Nabe (71), eine Felge (73) und mindestens zwei Arme (75) beinhaltet, die jeweils die Nabe (71) und die Felge (73) miteinander verbinden, mindestens eine Öffnung (78), die zwischen den beiden Armen (75) und der Felge (73) eingerichtet ist, und eine geschlossene Kontur (28) aufweist,
**dadurch gekennzeichnet, dass** es weiter Folgendes umfasst:
- mindestens ein Bauteil, das ein Zusatzgerät (2) bildet, das einen profilierten Teil (23) in einer Form, die im Allgemeinen der geschlossenen Kontur (28) entspricht, und einen im Allgemeinen oberflächlichen Teil (21) aufweist, der den profilierten Teil (23) abschließt, und
- einen Befestigungssatz (24),
und dadurch, dass der profilierte Teil (23) auf einer Seite des Radkörpers (3) in die Öffnung (78), wodurch diese letztere durch Formschluss abgedeckt wird, bis zu einer endgültigen Position eingeführt wird, in der sich der oberflächliche Teil (21), mindestens in der Nähe der Kontur (28), bündig an den Armen (75) anlegt, während der Befestigungssatz (24) für den Halt des Bauteils (2) in dieser endgültigen Position sorgt.

2. Gerät (1) nach Anspruch 1, wobei der Radkörper (3) und/oder das Zusatzgerät (2) eine Greifaufnahme (25) für ein Gerät oder Finger umfassen, wobei die Greifaufnahme (25) konfiguriert ist, um das Abnehmen des Zusatzgerätes (2) aus dem Radkörper (3) durch Ziehen aus einer der beiden Flächen (79; 99) des Radkörpers (3) zu ermöglichen.

3. Gerät (1) nach einem der vorstehenden Ansprüche, wobei das Zusatzgerät (2) aus mindestens zwei Bauteilen gebildet ist, wobei die beiden Bauteile und der Befestigungssatz (24) derart konfiguriert sind, um die beiden Bauteile abnehmbar aufeinander zusammenzusetzen, indem die Kontur (28) der Öffnung(78) eingespannt wird.

4. Gerät (1) nach einem der vorstehenden Ansprüche, wobei das Zusatzgerät (2) mindestens zwei im Allgemeinen ähnliche oberflächliche Teile (21) umfasst, wobei jeder der beiden im Allgemeinen oberflächlichen Teile (21) eine jeweilige Öffnung (78) abschliesst.

5. Gerät (1) nach einem der vorstehenden Ansprüche, wobei der im Allgemeinen oberflächliche Teil (21) durchsichtig ist.

6. Gerät (1) nach einem der vorstehenden Ansprüche, wobei der Befestigungssatz (24) mindestens eine Befestigungslasche umfasst, wobei die Abnehmbarkeit der Befestigung durch die elastische Verformung der Befestigungslasche erlaubt ist.

7. Gerät (1) nach einem der vorstehenden Ansprüche, wobei die Öffnung (78) durch jeweilige Ränder der beiden Arme (75) und der Felge (73) begrenzt wird.

8. Gerät (1) nach einem der vorstehenden Ansprüche, wobei das Zusatzgerät (2) Verstärkungsrippen (26) umfasst, die von einer Oberfläche (27) des im Allgemeinen oberflächlichen Teils (21) getragen werden, wobei die Verstärkungsrippen (26) zur Versteifung des im Allgemeinen oberflächlichen Teils (21) beitragen.

9. Gerät (1) nach einem der vorstehenden Ansprüche, wobei der Radkörper (3) durch das Zusammensetzen eines ersten Flansches (7) und eines zweiten Flansches (9), die aufeinander montiert werden, gebildet wird,
der erste Flansch (7) einen mittleren Teil (71), einen umlaufenden Teil (73) in einer allgemeinen Ringform, und mindestens zwei Arme (75) beinhaltet, die den mittleren Teil (71) und den umlaufenden Teil (73) miteinander verbindet,
der zweite Flansch (9) im montierten Zustand entsprechend zum umlaufenden Teil (73) des ersten Flansches (7) ist, der Radkörper (3) eine Felge (121) aufweist, die gemeinsam durch den umlaufenden Teil (73) des ersten Flansches (7) und den zweiten Flansch (9) gebildet wird, und eine Nabe, die durch den mittleren Teil (71) des ersten Flansches (7) gebildet wird,
der erste Flansch (7) und der zweite Flansch (9) aneinander befestigt sind und das Zusatzgerät (2) an dem ersten Flansch (7) befestigt wird.

10. Bauteil (2) für ein Gerät einer landwirtschaftlichen Maschine zur Bearbeitung des Bodens nach einem der Ansprüche 1 bis 9, wobei der Radkörper (3) eine Nabe (71), eine Felge (73) und mindestens zwei Arme (75) beinhaltet, die jeweils die Nabe (71) und die Felge (73) miteinander verbinden, mindestens eine Öffnung (78), die zwischen den beiden Armen (75) und der Felge (73) eingerichtet ist, und eine geschlossene Kontur (28) aufweist, wobei das Bauteil (2) einen profilierten Teil (23) in einer Form aufweist, die im Allgemeinen der geschlossenen Kontur (28) entspricht, und einen im Allgemeinen oberflächlichen Teil (21), der den profilierten Teil (23) abschließt, wobei der profilierte Teil (23) auf einer Seite des Radkörpers (3) in die Öffnung (78), wodurch diese letztere durch Formschluss abgedeckt wird, bis zu einer endgültigen Position eingeführt wird, in der sich der oberflächliche Teil (21), mindestens in der Nähe der Kontur (28), bündig an den Armen (75) anlegt.

## Claims

1. Agricultural machine tool (1) for tillage of the type comprising a wheel body (3) which includes a hub (71), a rim (73) and at least two arms (75) which each connect the hub (71) and the rim (73) to each other, at least one aperture (78) provided between the two arms (75) and the rim (73), and having a closed contour (28),
**characterised in that** it further comprises:
- a component which forms an accessory (2) having a profiled portion (23) having a shape which generally corresponds to said closed contour (28), and a generally superficial portion (21) which terminates the profiled portion (23), and
- a set of fixing members (24),
and **in that** the profiled portion (23) introduces at one side of the wheel body (3) into the aperture (78), closing the aperture (78) by means of form-fitting cooperation, as far as a final position in which the superficial portion (21) moves into a flush state with the arms (75), at least in the region of the contour (28), whilst the set of fixing members (24) ensures the retention of the component (2) **in that** final position.

2. Tool (1) according to claim 1, wherein the wheel body (3) and/or the accessory (2) comprise(s) an engaging member (25) for a tool or fingers, the engaging member (25) being configured to allow the withdrawal of the accessory (2) from the wheel body (3) by pulling from one of the two faces (79; 99) of the wheel body (3).

3. Tool (1) according to any one of the preceding claims, wherein the accessory (2) is formed from at least two components, the two components and the set of fixing members (24) being configured so as to assemble the two components one on the other in a removable manner, enclosing the contour (28) of the aperture (78).

4. Tool (1) according to any one of the preceding claims, wherein the accessory (2) comprises at least two similar, generally superficial portions (21), each of the two generally superficial portions (21) closing a respective aperture (78).

5. Tool (1) according to any one of the preceding claims, wherein the generally superficial portion (21) is transparent.

6. Tool (1) according to any one of the preceding claims, wherein the set of fixing members (24) comprises at least one fixing lug, the removability of the fixing member being allowed by the resilient deformation of the fixing lug.

7. Tool (1) according to any one of the preceding claims, wherein the aperture (78) is delimited by respective edges of the two arms (75) and the rim (73).

8. Tool (1) according to any one of the preceding claims, wherein the accessory (2) comprises reinforcement ribs (26) which are carried by a surface (27) of the generally superficial portion (21), the reinforcement ribs (26) contributing to the stiffening of the generally superficial portion (21).

9. Tool (1) according to any one of the preceding claims, wherein the wheel body (3) is formed by the assembly of a first flange (7) and a second flange (9) which mount one on the other,
the first flange (7) comprises a central portion (71), a peripheral portion (73) of generally annular form and at least two arms (75) which connect the central portion (71) and the peripheral portion (73) to each other,
the second flange (9) is homologous to the peripheral portion (73) of the first flange (7), in the mounted state, the wheel body (3) has a rim (121) which is formed together by the peripheral portion (73) of the first flange (7) and the second flange (9) and a hub which is formed by the central portion (71) of the first flange (7),
the first flange (7) and the second flange (9) fix to each other and the accessory (2) fixes to the first flange (7).

10. Component (2) for an agricultural machine tool for tillage according to any one of claims 1 to 9, the wheel body (3) including a hub (71), a rim (73) and at least two arms (75) which each connect the hub (71) and the rim (73) to each other, at least one aperture (78) provided between the two arms (75) and the rim (73), and having a closed contour (28), the component (2) having a profiled portion (23) having a shape which generally corresponds to said closed contour (28), and a generally superficial portion (21) which terminates the profiled portion (23), the profiled portion (23) introduces at one side of the wheel body (3) into said aperture (78), closing the aperture (78) by means of form-fitting cooperation, as far as a final position in which the superficial portion (21) moves into a flush state with the arms (75), at least in the region of the contour (28).
